# EUROPÄISCHE PATENTSCHRIFT

(11) **EP 2 882 813 B1**
(45) Veröffentlichungstag und Bekanntmachung des Hinweises auf die Patenterteilung: **04.05.2016**
(21) Anmeldenummer: 13750530.1
(22) Anmeldetag: 05.08.2013
(51) Int. Cl.: C09D 5/00

(54) **VERFAHREN ZUR HERSTELLUNG EINER FARB- UND/ODER EFFEKTGEBENDEN MEHRSCHICHTIGEN LACKIERUNG**
METHOD FOR PRODUCING A COLOR- AND/OR EFFECT-PRODUCING MULTI-LAYER COATING
PROCÉDÉ DE PRODUCTION D'UN LAQUAGE MULTICOUCHE COLORANT OU À EFFET

(30) Priorität: 07.08.2012 EP 12179470; 07.08.2012 US 201261680282 P
(43) Veröffentlichungstag der Anmeldung: 17.06.2015
(73) Patentinhaber: BASF Coatings GmbH, 48165 Münster (DE)
(72) Erfinder: STEINMETZ, Bernhard, 97535 Rütschenhausen (DE); SCHAD, Matthias, 97084 Würzburg (DE); JANKOWSKI, Peggy, 97261 Güntersleben (DE)
(86) Internationale Anmeldenummer: PCT/EP2013/066400
(87) Internationale Veröffentlichungsnummer: WO 2014/023695

(56) Entgegenhaltungen:
- WO-A1-91/13923
- WO-A2-95/31510
- DE-A1- 19 528 878
- DE-A1-102010 012 449
- DE-A1-102010 025 768
- DE-A1-102010 025 769
- DE-A1-102010 026 407

## Beschreibung

Die Erfindung betrifft ein Verfahren zur Herstellung einer farb- und/oder effektgebenden mehrschichtigen Lackierung, bei dem
(1) ein pigmentierter wässriger Basislack auf ein Substrat aufgebracht wird,
(2) aus dem in Stufe (1) aufgebrachten Lack ein Polymerfilm gebildet wird,
(3) auf die so erhaltene Basislackschicht ein Klarlack aufgebracht wird und anschließend
(4) die Basislackschicht zusammen mit der Klarlackschicht gehärtet wird.

Die Erfindung betrifft außerdem pigmentierte wässrige Basislacke, die zur Herstellung von farb- und/oder effektgebenden mehrschichtigen Lackierungen geeignet sind.

Das oben beschriebene Verfahren ist bekannt (vgl. z.B. die deutsche Patentanmeldung DE 199 48 004 A1, Seite 17, Zeile 37, bis Seite 19, Zeile 22, oder das deutsche Patent DE 100 43 405 C1, Spalte 3, Absatz [0018], und Spalte 8, Absatz [0052], bis Spalte 9, Absatz [0057], in Verbindung mit Spalte 6, Absatz [0039], bis Spalte 8, Absatz [0050]) und wird beispielsweise in großem Umfang sowohl für die Erstlackierung (OEM) als auch für die Reparaturlackierung von Automobilkarossen eingesetzt.

Mit dem in Rede stehenden so genannten basecoat/clearcoat-Verfahren werden im Nass-in-nass-Verfahren farb- und/oder effektgebende mehrschichtige Lackierungen erhalten. Bei diesen Lackierungen treten häufig als kleinste Löcher in der Klar- und Basislackschicht sichtbare Nadelstiche auf.

Die der vorliegenden Erfindung zugrunde liegende Aufgabenstellung besteht somit in der Bereitstellung eines Verfahrens der oben beschrieben Art mit dem farb- und/oder effektgebende mehrschichtige Lackierungen erhältlich sind, die gegenüber den Lackierungen des Standes der Technik verbessert sind. Die Lackierungen sollen insbesondere keine oder nur sehr wenige Nadelstiche und/oder eine erhöhte Nadelstichgrenze aufweisen. Als Nadelstichgrenze wird die Trockenschichtdicke der Basislackschicht bezeichnet, ab der Nadelstiche auftreten.

Diese Aufgabe wird überraschenderweise dadurch gelöst, dass in Stufe (1) des oben beschriebenen basecoat/clearcoat-Verfahrens ein pigmentierter wässriger Basislack eingesetzt wird, welcher mindestens eine Etherverbindung der Strukturformel (I) 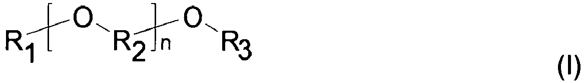 enthält, wobei es sich bei R₁ um einen Cₓ-Alkylrest, bei R₂ um einen C_{y}-Alkylenrest und bei R₃ um einen C_{z}-Alkylrest handelt, n = 0 bis 5 beträgt, die weitere Bedingung x + n · y + z = 18 bis 24 erfüllt ist und die Summe über die gewichtsprozentualen Anteile, bezogen auf das Gesamtgewicht des in Stufe (1) aufgetragenen wässrigen Basislacks, aller Etherverbindungen gemäß Strukturformel (I) 0,1 bis 5 Gew.-%, beträgt.

Die Erfindung betrifft auch die oben beschriebenen, in Stufe (1) des basecoat/clearcoat-Verfahrens einsetzbaren pigmentierten wässrigen Lacke.

In Stufe (1) des erfindungsgemäßen Verfahrens können im Prinzip alle bekannten wässrigen Basislacke eingesetzt werden, wenn sie mindestens eine erfindungsgemäße Etherverbindung enthalten und die Summe über die gewichtsprozentualen Anteile, bezogen auf das Gesamtgewicht des in Stufe (1) aufgetragenen wässrigen Basislacks, aller Etherverbindungen gemäß Strukturformel (I) 0,1 bis 5 Gew.-%, beträgt.

Basislacke werden dann als "wässrig bezeichnet, wenn sie 30 bis 70 Gew.-% Wasser, bezogen auf das Gesamtgewicht des Basislacks enthalten. Die Begriffe "wässriger Basislack" und "Wasserbasislack" werden in dieser Anmeldung als gleichbedeutende Begriffe verwendet.

Die erfindungsgemäß eingesetzten Basislacke enthalten farb- und/oder effektgebende Pigmente. Solche Farbpigmente und Effektpigmente sind dem Fachmann bekannt und werden beispielsweise in Römpp-Lexikon Lacke und Druckfarben, Georg Thieme Verlag, Stuttgart, New York, 1998, Seite 176 und 451, beschrieben. Der Anteil der Pigmente kann beispielsweise im Bereich von 1 bis 40 Gew.-%, bevorzugt 2 bis 20 Gew.-%, besonders bevorzugt 5 bis 15 Gew.-%, bezogen auf das Gesamtgewicht des pigmentierten wässrigen Basislacks, liegen.

Im erfindungsgemäßen Verfahren werden bevorzugt Basislacke eingesetzt, die als Bindemittel physikalisch, thermisch oder thermisch und mit aktinischer Strahlung härtbare Bindemittel enthalten.

Besonders bevorzugt ist als Bindemittel mindestens ein gesättigtes oder ungesättigtes Polyurethanharz enthalten. Derartige Polyurethanharz enthaltende Lacke können ebenfalls üblicherweise physikalisch, thermisch oder thermisch und mit aktinischer Strahlung gehärtet werden.

Im Rahmen der vorliegenden Erfindung bedeutet der Begriff "physikalische Härtung" die Bildung eines Films durch Abgabe von Lösemittel aus Polymerlösungen oder Polymerdispersionen. Üblicherweise sind hierfür keine Vernetzungsmittel notwendig.

Im Rahmen der vorliegenden Erfindung bedeutet der Begriff "thermische Härtung" die durch Hitze initiierte Vernetzung einer Lackschicht, bei der in dem zugrunde liegenden Lack entweder ein separat vorliegendes Vernetzungsmittel oder aber selbstvernetzende Bindemittel angewandt werden. Das Vernetzungsmittel enthält reaktive funktionelle Gruppen, die zu den in den Bindemitteln vorhandenen reaktiven funktionellen Gruppen komplementär sind. Üblicherweise wird dies von der Fachwelt als Fremdvernetzung bezeichnet. Sind die komplementären reaktiven funktionellen Gruppen oder autoreaktiven funktionellen Gruppen, d.h. Gruppen, die mit Gruppen derselben Art reagieren, bereits in den Bindemittelmolekülen vorhanden, liegen selbstvernetzende Bindemittel vor. Beispiele geeigneter komplementärer reaktiver funktioneller Gruppen und autoreaktiver funktioneller Gruppen sind aus der deutschen Patentanmeldung DE 199 30 665 A1, Seite 7, Zeile 28 bis Seite 9, Zeile 24 bekannt.

Im Rahmen der vorliegenden Erfindung ist unter aktinischer Strahlung elektromagnetische Strahlung wie nahes Infrarot (NIR), UV-Strahlung, insbesondere UV-Strahlung, und Korpuskularstrahlung wie Elektronenstrahlung zu verstehen. Die Härtung durch UV-Strahlung wird üblicherweise durch radikalische oder kationische Photoinitiatoren initiiert.

Werden die thermische Härtung und die Härtung mit aktinischem Licht gemeinsam angewandt, spricht man auch von "Dual Cure".

In der vorliegenden Erfindung sind Basislacke bevorzugt, die thermisch oder thermisch und mit aktinischer Strahlung, also mittels "Dual Cure", härtbar sind. Insbesondere sind solche Basislacke bevorzugt, die als Bindemittel ein Polyurethanharz und als Vernetzungsmittel ein Aminoplastharz oder ein blockiertes oder unblockiertes Polyisocyanat, bevorzugt ein Aminoplastharz, enthalten. Unter den Aminoplastharzen sind insbesondere Melaminharze bevorzugt.

Das bevorzugt enthaltene Polyurethanharz kann ionisch und/oder nicht ionisch hydrophil stabilisiert sein. In bevorzugten Ausführungsformen der vorliegenden Erfindung ist das Polyurethanharz ionisch hydrophil stabilisiert. Die bevorzugten Polyurethanharze sind linear oder enthalten Verzweigungen. Besonders bevorzugt handelt es sich um ein mit olefinisch ungesättigten Monomeren verbundenes Polyurethanharz. Vorzugsweise werden als olefinisch ungesättigte Monomere Acrylat- und/oder Methacrylatgruppen-haltige Monomere an das Polyurethanharz (A) gebunden, wodurch Polyurethan(meth)acrylate entstehen. Ganz besonders bevorzugt ist das Polyurethanharz ein Polyurethan(meth)acrylat. Das bevorzugt enthaltene Polyurethanharz ist physikalisch, thermisch oder thermisch und mit aktinischer Strahlung härtbar. Insbesondere ist es thermisch oder thermisch und mit aktinischer Strahlung härtbar. Besonders bevorzugt umfasst das Polyurethanharz reaktive funktionelle Gruppen, durch die eine Fremdvernetzung möglich ist.

Der Begriff "(Meth)Acrylat" soll im Folgenden sowohl Acrylat als auch Methacrylat bezeichnen. D.h. ein entsprechendes Polymer kann daher sowohl aus Acrylaten oder Methacrylaten aufgebaut sein, sowie gegebenenfalls weitere von (Meth)acrylaten unterschiedliche ethylenisch ungesättigte Monomere enthalten.

Geeignete gesättigte oder ungesättigte Polyurethanharze werden beispielsweise beschrieben in
- der deutschen Patentanmeldung DE 199 14 896 A1, Spalte 1, Zeilen 29 bis 49 und Spalte 4, Zeile 23 bis Spalte 11, Zeile 5,
- der deutschen Patentanmeldung DE 199 48 004 A1, Seite 4, Zeile 19 bis Seite 13, Zeile 48,
- der europäischen Patentanmeldung EP 0 228 003 A1, Seite 3, Zeile 24 bis Seite 5, Zeile 40,
- der europäischen Patentanmeldung EP 0 634 431 A1, Seite 3, Zeile 38 bis Seite 8, Zeile 9, oder
- der internationalen Patentanmeldung WO 92/15405, Seite 2, Zeile 35 bis Seite 10, Zeile 32.

Für die Herstellung des Polyurethanharzes werden vorzugsweise die dem Fachmann bekannten aliphatischen, cycloaliphatischen, aliphatisch-cycloaliphatischen, aromatischen, aliphatisch-aromatischen und/oder cycloaliphatisch-aromatischen Polyisocyanate eingesetzt.

Als Alkohol-Komponente für die Herstellung der Polyurethanharze werden bevorzugt die dem Fachmann bekannten, gesättigten und ungesättigten höhermolekularen und niedermolekularen Polyole sowie gegebenenfalls auch Monoalkohole in untergeordneten Mengen eingesetzt. Als niedermolekulare Polyole werden insbesondere Diole und gegebenenfalls in untergeordneten Mengen Triole zur Einführung von Verzweigungen eingesetzt. Beispiele geeigneter höhermolekularer Polyole sind gesättigte oder olefinisch ungesättigte Polyesterpolyole und/oder Polyetherpolyole. Insbesondere werden als höhermolekulare Polyole Polyesterpolyole, insbesondere solche mit einem zahlenmittleren Molekulargewicht von 400 bis 5000 g/mol (gemessen mittels Gelpermeationschromatographie gegen einen Polystyrolstandard, Eluent: Tetrahydrofuran), eingesetzt.

Zur hydrophilen Stabilisierung beziehungsweise zur Erhöhung der Dispergierbarkeit in wässrigem Medium kann das bevorzugt enthaltene Polyurethanharz bestimmte ionische Gruppen und/oder Gruppen, die in ionische Gruppen überführt werden können (potentiell ionische Gruppen), enthalten. Solche Polyurethanharze werden im Rahmen der vorliegenden Erfindung als ionisch hydrophil stabilisierte Polyurethanharze bezeichnet. Ebenfalls enthalten sein können nicht ionische hydrophil modifizierende Gruppen. Bevorzugt sind aber die ionisch hydrophil stabilisierten Polyurethane. Genauer handelt es sich bei den modifizierenden Gruppen entweder um
- funktionelle Gruppen, die durch Neutralisationsmittel und/oder Quaternisierungsmittel in Kationen überführt werden können, und/oder kationische Gruppen (kationische Modifizierung) oder
- funktionelle Gruppen, die durch Neutralisationsmittel in Anionen überführt werden können, und/oder anionische Gruppen (anionische Modifizierung) und/oder
- nicht ionische hydrophile Gruppen (nicht-ionische Modifizierung).

Wie der Fachmann weiß, handelt es sich bei den funktionellen Gruppen zur kationischen Modifizierung um beispielsweise primäre, sekundäre und/oder tertiäre Aminogruppen, sekundäre Sulfidgruppen und/oder tertiäre Phosphingruppen, insbesondere tertiäre Aminogruppen und sekundäre Sulfidgruppen (funktionelle Gruppen, die durch Neutralisationsmittel und/oder Quaternisierungsmittel in kationische Gruppen überführt werden können). Weiterhin zu nennen sind die aus den vorgenannten funktionellen Gruppen unter Einsatz von dem Fachmann bekannten Neutralisationsmitteln und/oder Quaternisierungsmitteln hergestellte kationische Gruppen wie primäre, sekundäre, tertiäre und/oder quaternäre Ammoniumgruppen, tertiäre Sulfoniumgruppen und/oder quaternäre Phosphoniumgruppen, insbesondere quaternäre Ammoniumgruppen und tertiäre Sulfoniumgruppen.

Bei den funktionellen Gruppen zur anionischen Modifizierung handelt es sich bekanntermaßen um beispielsweise Carbonsäure-, Sulfonsäure- und/oder Phosphonsäuregruppen, insbesondere Carbonsäuregruppen (funktionelle Gruppen, die durch Neutralisationsmittel in anionische Gruppen überführt werden können) sowie aus den vorgenannten funktionellen Gruppen unter Einsatz von dem Fachmann bekannten Neutralisationsmittel hergestellte anionische Gruppen wie Carboxylat-, Sulfonat- und/oder Phosphonatgruppen.

Bei den funktionellen Gruppen zur nicht-ionischen hydrophilen Modifizierung handelt es sich vorzugsweise um Poly(oxyalkylen)-Gruppen, insbesondere Poly(oxyethylen)-Gruppen.

Die ionisch hydrophilen Modifizierungen können durch Monomere, welche die (potentiell) ionischen Gruppen enthalten, in das Polyurethanharz eingeführt werden. Die nicht-ionischen Modifizierungen werden beispielsweise durch den Einbau von Poly(ethylen)oxid-Polymeren als laterale oder endständige Gruppen der Polyurethanmoleküle eingeführt. Die hydrophilen Modifizierungen werden beispielsweise über Verbindungen eingeführt, die mindestens eine gegenüber Isocyanatgruppen reaktive Gruppe, vorzugsweise mindestens eine Hydroxygruppe, enthalten. Zur Einführung der ionischen Modifizierung können Monomere eingesetzt werden, die neben den modifizierenden Gruppen mindestens eine Hydroxygruppe enthalten. Zur Einführung der nicht-ionischen Modifizierungen werden bevorzugt die dem Fachmann bekannten Polyetherdiole und/oder Alkoxypoly(oxyalkylen)alkohole eingesetzt.

Vorzugsweise kann es sich bei dem Polyurethanharz um ein Pfropfpolymer handeln. Insbesondere handelt es sich um ein mittels olefinisch ungesättigten Verbindungen, vorzugsweise olefinisch ungesättigten Monomeren, gepfropftes Polyurethanharz. In diesem Fall ist das Polyurethan also beispielsweise mit Seitengruppen und/oder Seitenketten gepfropft, die auf olefinisch ungesättigten Monomeren basieren. Insbesondere handelt es sich um Seitenketten, die auf Poly(meth)acrylaten basieren. Als Poly(meth)acrylate werden im Rahmen der vorliegenden Erfindung Polymere beziehungsweise polymere Reste bezeichnet, die Acrylat- und/oder Methacrylatgruppen-haltige Monomere umfassen, vorzugsweise aus Acrylat- und/oder Methacrylatgruppen-haltigen Monomeren bestehen. Unter Seitenketten, die auf Poly(meth)acrylaten basieren, sind Seitenketten zu verstehen, die bei der Pfropfpolymerisation unter Einsatz von (Meth)acrylatgruppen-haltigen Monomeren aufgebaut werden. Dabei werden bei der Pfropfpolymerisation vorzugsweise mehr als 50 mol-%, insbesondere mehr als 75 mol-%, insbesondere 100 mol.-%, bezogen auf die Gesamtmenge der bei der Pfropfpolymerisation eingesetzten Monomere, an (Meth)acrylatgruppen-haltigen Monomeren eingesetzt.

Die beschriebenen Seitenketten werden bevorzugt nach der Herstellung einer Polyurethanharz-Primärdispersion in das Polymer eingeführt. In diesem Fall kann das in der Primärdispersion vorliegende Polyurethanharz seiten- und/oder endständige olefinisch ungesättigte Gruppen enthalten, über die dann die Pfropfpolymerisation mit den olefinisch ungesättigten Verbindungen verläuft. Das zu pfropfende Polyurethanharz kann also ein ungesättigtes Polyurethanharz (A) sein. Bei der Pfropfpolymerisation handelt es sich dann um eine radikalische Polymerisation olefinisch ungesättigter Reaktionspartner. Möglich ist beispielsweise auch, dass die zur Pfropfpolymerisation eingesetzten olefinisch ungesättigten Verbindungen mindestens eine Hydroxygruppe enthalten. Dann kann auch zunächst eine Anbindung der olefinisch ungesättigten Verbindungen über diese Hydroxygruppen durch Reaktion mit freien Isocyanatgruppen des Polyurethanharzes erfolgen. Diese Anbindung findet anstelle oder neben der radikalischen Reaktion der olefinisch ungesättigten Verbindungen mit den gegebenenfalls vorhandenen seiten- und/oder endständigen olefinisch ungesättigten Gruppen des Polyurethanharzes statt. Danach folgt dann wieder die Pfropfpolymerisation über radikalische Polymerisation wie sie weiter oben beschrieben wurde. Erhalten werden jedenfalls mit olefinisch ungesättigten Verbindungen, vorzugsweise olefinisch ungesättigten Monomeren, gepfropfte Polyurethanharze.

Als olefinisch ungesättigte Verbindungen, mit denen das Polyurethanharz (A) bevorzugt gepfropft wird, können praktisch alle radikalisch polymerisierbaren, olefinisch ungesättigten und organischen Monomere eingesetzt werden, die dem Fachmann für diese Zwecke zur Verfügung stehen. Beispielhaft seien einige bevorzugte Monomerklassen genannt:
- Hydroxyalkylester der (Meth)acrylsäure oder anderer alpha, beta -ethylenisch ungesättigter Carbonsäuren,
- (Meth)acrylsäurealkylester und/oder -cycloalkylester mit bis zu 20 Kohlenstoffatomen im Alkylrest,
- Ethylenisch ungesättigte Monomere, enthaltend mindestens eine Säuregruppe, insbesondere genau eine Carboxylgruppe, wie beispielsweise (Meth)acrylsäure,
- Vinylester von in alpha-Stellung verzweigten Monocarbonsäuren mit 5 bis 18 Kohlenstoffatomen,
- Umsetzungsprodukte aus (Meth)acrylsäure mit dem Glycidylester einer in alpha-Stellung verzweigten Monocarbonsäure mit 5 bis 18 Kohlenstoffatomen,
- Weitere ethylenisch ungesättigte Monomere wie Olefine (beispielsweise Ethylen), (Meth)acrylsäureamide, vinylaromatische Kohlenwasserstoffe (beispielsweise Styrol), Vinylverbindungen wie Vinylchlorid und/oder Vinylether wie Ethylvinylether.

Bevorzugt werden (Meth)acrylatgruppen-haltige Monomere eingesetzt, sodass das es sich bei den aufgepfropften Seitenketten um Poly(meth)acrylat-basierende Seitenketten handelt.

Die seiten- und/oder endständigen olefinisch ungesättigten Gruppen in dem Polyurethanharz, über die die Pfropfpolymerisation mit den olefinisch ungesättigten Verbindungen verlaufen kann, werden bevorzugt über Monomere in das Polyurethanharz eingeführt, welche neben einer olefinisch ungesättigten Gruppe beispielsweise noch mindestens eine gegenüber Isocyanatgruppen reaktive Gruppe enthalten. Bevorzugt sind Hydroxygruppen sowie primäre und sekundäre Aminogruppen. Insbesondere bevorzugt sind Hydroxygruppen.

Natürlich können die beschriebenen Monomere, durch welche die seiten- und/oder endständigen olefinisch ungesättigten Gruppen in das Polyurethanharz eingeführt werden können, auch zum Einsatz kommen, ohne dass das Polyurethanharz danach noch zusätzlich mit olefinisch ungesättigten Verbindungen gepfropft wird. Bevorzugt ist allerdings, dass das Polyurethanharz mit olefinisch ungesättigten Verbindungen gepfropft ist.

Das bevorzugt enthaltene Polyurethanharz kann ein selbst- und/oder fremdvernetzendes Bindemittel sein. Bevorzugt umfasst das Polyurethanharz reaktive funktionelle Gruppen, durch die eine Fremdvernetzung möglich ist. In diesem Fall ist in dem pigmentierten wässrigen Basislack bevorzugt mindestens ein Vernetzungsmittel enthalten. Insbesondere handelt es sich bei den reaktiven funktionellen Gruppen, durch die eine Fremdvernetzung möglich ist, um Hydroxygruppen. Besonders vorteilhaft sind im Rahmen des erfindungsgemäßen Verfahrens polyhydroxyfunktionelle Polyurethanharze einsetzbar. Dies bedeutet, dass das Polyurethanharz im Mittel mehr als eine Hydroxygruppe pro Molekül enthält.

Die Herstellung des Polyurethanharzes erfolgt nach den üblichen Methoden der Polymerchemie. Gemeint sind dabei beispielsweise die Polymerisation von Polyisocyanaten und Polyolen zu Polyurethanen und die bevorzugt dann folgende Pfropfpolymerisation mit olefinisch ungesättigten Verbindungen. Diese Methoden sind dem Fachmann bekannt und können individuell angepasst werden. Beispielhafte Herstellungsverfahren und Reaktionsbedingungen sind der europäischen Patentschrift EP 0521 928 B1, Seite 2, Zeile 57 bis Seite 8, Zeile 16 zu entnehmen.

Wenn die bevorzugt eingesetzten Basislacke als selbstvernetzende Systeme vorliegen, dann liegt der Polyurethanharzgehalt bei 50 bis 100 Gew.-% bevorzugt 50 bis 90 Gew.-% und besonders bevorzugt 50 bis 80 Gew.-%, bezogen auf den filmbildenden Festkörper des Basislacks. D.h. werden Polyurethanharze eingesetzt, welche die oben beschriebenen bevorzugten Merkmale realisieren, dann liegt der Gehalt dieser Polyurethanharze bei 50 bis 100 Gew.-% bevorzugt 50 bis 90 Gew.-% und besonders bevorzugt 50 bis 80 Gew.-%, bezogen auf den filmbildenden Festkörper des Basislacks. Dabei ist ferner bevorzugt, dass der eingesetzte Basislack ausschließlich solche Polyurethanharze enthält, welche die oben beschriebenen bevorzugten Merkmale realisieren.

Unter filmbildendem Festkörper ist der nichtflüchtige Gewichtsanteil des Basislacks ohne Pigmente und gegebenenfalls Füllstoffe zu verstehen. Der filmbildende Festkörper ist folgendermaßen bestimmbar: Eine Probe des pigmentierten wässrigen Basislacks (etwa 1 g) wird mit der 50 bis 100-fachen Menge Tetrahydrofuran versetzt und dann etwa 10 Minuten gerührt. Anschließend werden die unlöslichen Pigmente und gegebenenfalls Füllstoffe abfiltriert, der Rückstand mit wenig THF nachgespült und von dem so erhaltenen Filtrat das THF am Rotationsverdampfer entfernt. Der Rückstand des Filtrats wird zwei Stunden bei 120°C getrocknet und der dabei resultierende filmbildende Festkörper ausgewogen.

Im Falle von fremdvernetzenden Systemen liegt der Polyurethanharzgehalt bei 10 bis 80 Gew.-%, bevorzugt bei 15 bis 75 Gew.-% und besonders bevorzugt bei 20 bis 70 Gew.-%, jeweils bezogen auf den filmbildenden Festkörper des Basislacks. Werden Polyurethanharze eingesetzt, welche die oben beschriebenen bevorzugten Merkmale realisieren, dann liegt der Gehalt dieser Polyurethanharze bei 10 bis 80 Gew.-% bevorzugt 15 bis 75 Gew.-% und besonders bevorzugt 20 bis 70 Gew.-%, bezogen auf den filmbildenden Festkörper des Basislacks. Dabei ist ferner bevorzugt, dass der eingesetzte Basislack ausschließlich solche Polyurethanharze enthält, welche die oben beschriebenen bevorzugten Merkmale realisieren.

Das bevorzugt enthaltene Polyurethanharz besitzt vorzugsweise ein zahlenmittleres Molekulargewicht von 200 bis 30000 g/mol, bevorzugt von 2000 bis 20000 g/mol (gemessen mittels Gelpermeationschromatographie gegen einen Polystyrolstandard; als Eluent wird Tetrahydrofuran eingesetzt). Es besitzt zudem beispielsweise eine Hydroxylzahl von 0 bis 250 mg KOH/g, insbesondere aber von 20 bis 150 mg KOH/g. Die Säurezahl des Polyurethanharzes liegt bevorzugt bei 5 bis 200 mg KOH/g, insbesondere bei 10 bis 40 mg KOH/g. Die Hydroxylzahl wird nach DIN / ISO 4629, die Säurezahl gemäß DIN 53402 bestimmt.

Es ist erfindungswesentlich, dass die in Stufe (1) des erfindungsgemäßen Verfahrens eingesetzten wässrigen Basislacke mindestens eine Etherverbindung der Strukturformel (I) enthalten: 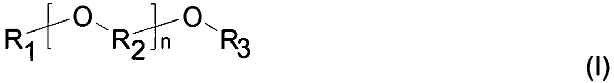 wobei es sich bei R₁ um einen Cₓ-Alkylrest, bei R₂ um einen C_{y}-Alkylenrest und bei R₃ um einen C_{z}-Alkylrest handelt, n = 0 bis 5 beträgt und die weitere Bedingung x + n · y + z = 18 bis 24 erfüllt ist und die Summe über die gewichtsprozentualen Anteile, bezogen auf das Gesamtgewicht des in Stufe (1) aufgetragenen wässrigen Basislacks, aller Etherverbindungen gemäß Strukturformel (I) 0,1 bis 5 Gew.-%, beträgt.

Vorzugsweise beträgt die Summe über die gewichtsprozentualen Anteile bezogen auf das Gesamtgewicht des in Stufe (1) aufgetragenen wässrigen Basislacks aller Etherverbindungen gemäß Strukturformel (I) 0,1 bis 4,5 Gew.-% und ganz besonders bevorzugt 0,2 bis 4 Gew.-%.

Wenn der Gehalt der mindestens einen erfindungsgemäßen Etherverbindung unter 0,1 Gew.-% liegt, wird die der Erfindung zugrunde liegende Aufgabe nicht gelöst. Liegt der Gehalt bei mehr als 5 Gew.-% treten Nachteile auf, wie z.B. eine Haftungsverschlechterung bei unterbrannten Aufbauten.

Bevorzugt ist zudem x + n · y + z = 18 bis 22. Ebenfalls bevorzugt ist n = 0 bis 3, besonders bevorzugt n = 0 bis 2 und ganz besonders bevorzugt n = 0. Die Summe über die gewichtsprozentualen Anteile, bezogen auf das Gesamtgewicht des in Stufe (1) aufgetragenen wässrigen Basislacks, aller Etherverbindungen gemäß Strukturformel (I), welche das bevorzugte Merkmal x + n · y + z = 18 bis 22 und/oder das oben bezeichnete bevorzugte, besonders bevorzugte beziehungsweise ganz besonders bevorzugte Merkmal bezüglich n realisieren, beträgt ebenfalls 0,1 bis 5 Gew.-%, vorzugsweise 0,1 bis 4,5 Gew.-% und ganz besonders bevorzugt 0,2 bis 4 Gew.-%. Dabei ist ferner bevorzugt, dass der besagte Basislack ausschließlich erfindungsgemäße Etherverbindungen enthält, welche das bevorzugte Merkmal x + n · y + z = 18 bis 22 und/oder das oben bezeichnete bevorzugte, besonders bevorzugte beziehungsweise ganz besonders bevorzugte Merkmal bezüglich n realisieren.

Bevorzugt wird ein Gemisch der erfindungsgemäßen Etherverbindungen eingesetzt, wobei n = 0 bis 2 und zusätzlich die Bedingung x + n · y + z = 18 bis 22 erfüllt ist. Ebenfalls bevorzugt wird ein Gemisch der erfindungsgemäßen Etherverbindungen eingesetzt, wobei n = 0 und zusätzlich die Bedingung x + n · y + z = 18 bis 22 erfüllt ist. Die Summe über die gewichtsprozentualen Anteile, bezogen auf das Gesamtgewicht des in Stufe (1) aufgetragenen wässrigen Basislacks, der erfindungsgemäßen Etherverbindungen in den oben bezeichneten Gemischen beträgt ebenfalls 0,1 bis 5 Gew.-%, vorzugsweise 0,1 bis 4,5 Gew.-% und ganz besonders bevorzugt 0,2 bis 4 Gew.-%. Dabei ist ferner bevorzugt, dass der besagte Basislack ausschließlich die in diesem Absatz spezifizierten erfindungsgemäßen Etherverbindungen enthält.

Bevorzugt wird ein Gemisch der erfindungsgemäßen Etherverbindung eingesetzt. Ein Gemisch der erfindungsgemäßen Etherverbindung ist beispielsweise erhältlich unter dem Markennamen Vammar® D10.

Bevorzugt ist zudem ein Verdicker enthalten. Als Verdicker eignen sich anorganische Verdicker aus der Gruppe der Schichtsilikate. Neben den anorganischen Verdickern können jedoch auch ein oder mehrere organische Verdicker eingesetzt werden. Diese werden vorzugsweise gewählt aus der Gruppe bestehend aus (Meth)acrylsäure-(Meth)acrylat-Copolymerisat-Verdickern, wie beispielsweise dem Handelsprodukt Viscalex HV30 (Ciba, BASF) und Polyurethanverdickem, wie beispielsweise dem Handelsprodukt DSX ® 1550 der Firma Cognis. Als (Meth)acrylsäure-(Meth)acrylat-Copolymerisat-Verdicker werden solche bezeichnet, die neben Acrylsäure und/oder Methacrylsäure auch ein oder mehrere Acrylsäureester (das heißt Acrylate) und/oder ein oder mehrere Methacrylsäureester (das heißt Methacrylate) einpolymerisiert enthalten. Den (Meth)acrylsäure-(Meth)acrylat-Copolymerisat-Verdickern gemein ist, dass diese in alkalischem Medium, das heißt bei pH-Werten > 7, insbesondere > 7,5 durch Salzbildung der Acrylsäure und/oder Methacrylsäure, das heißt durch die Bildung von Carboxylatgruppen einen starken Viskositätsanstieg zeigen. Werden (Meth)acrylsäureester eingesetzt, die aus (Meth)acrylsäure und einem C₁-C₆-Alkanol gebildet werden, so erhält man im wesentlichen nicht-assoziativ wirkende (Meth)acrylsäure-(Meth)acrylat-Copolymerisat-Verdicker, wie beispielsweise das oben genannte Viscalex HV30. Im Wesentlichen nicht-assoziativ wirkende (Meth)acrylsäure-(Meth)acrylat-Copolymerisat-Verdicker werden in der Literatur auch als ASE-Verdicker ("Alkali Soluble/Swellable Emulsion", alkalisch lösliche/quellbare Emulsion oder Dispersion) bezeichnet. Als (Meth)acrylsäure-(Meth)acrylatCopolymerisat-Verdicker sind jedoch auch sogenannte HASE-Verdicker ("Hydrophobically Modified Anionic Soluble Emulsions", hydrophob modifizierte anionisch lösliche Emulsion oder Dispersion) einsetzbar. Diese werden erhalten, wenn als Alkanol anstelle oder zusätzlich zu den C₁-C₆-Alkanolen solche mit einer größeren Anzahl an Kohlenstoffatomen, beispielsweise 7 bis 30, oder 8 bis 20 Kohlenstoffatomen eingesetzt werden. HASE-Verdicker wirken im Wesentlichen assoziativ verdickend. Die einsetzbaren (Meth)acrylsäure-(Meth)acrylatCopolymerisat-Verdicker eignen sich aufgrund ihrer verdickenden Eigenschaften nicht als Bindemittel-Harze, sie fallen somit nicht unter die als Bindemittel bezeichneten physikalisch, thermisch oder thermisch und aktinisch härtbaren Bindemitteln und sind somit explizit verschieden von den Poly(meth)acrylat basierten Bindemitteln, die in den erfindungsgemäßen Basislackzusammensetzungen eingesetzt werden können. Als Polyurethanverdicker sind die in der Literatur als HEUR ("Hydrophobically Modified Ethylene Oxide Urethane Rheology Modifiers", hydrophob modifizierte Ethylenoxid-Urethan-Rheologieadditive) bezeichneten, assoziativ wirkenden Verdicker zu verstehen. Chemisch handelt es sich hierbei um nichtionische verzweigte oder unverzweigte Blockcopolymere aus Polyethylenoxid-Ketten (manchmal auch Polypropylenoxid-Ketten), die über Urethanbindungen miteinander verknüpft sind und die endständige langkettige Alkyl- oder Alkylengruppen mit 8 bis 30 Kohlenstoffatomen tragen. Typische Alkylgruppen sind beispielsweise Dodecyl oder Stearyl-Gruppen, eine typische Alkenylgruppe ist beispielsweise eine Oleylgruppe, eine typische Arylgruppe ist die Phenylgruppe und eine typische alkylierte Arylgruppe ist beispielsweise eine Nonylphenylgruppe. Die Polyurethan-Verdicker eignen sich aufgrund ihrer verdickenden Eigenschaften und Struktur nicht als physikalisch, thermisch oder thermisch und physikalisch härtbare Bindemittel-Harze. Sie sind somit explizit verschieden von den Polyurethanen, die in den erfindungsgemäßen Basislack-Zusammensetzungen als Bindemittel eingesetzt werden können.

Der einzusetzende pigmentierte wässrige Basislack enthält bevorzugt zudem mindestens einen Polyester, insbesondere einen Polyester mit einem zahlenmittleren Molekulargewicht von 400 bis 5000 g/mol (gemessen mittels Gelpermeationschromatographie gegen einen Polystyrolstandard; als Eluat wird Tetrahydrofuran eingesetzt). Entsprechende Polyester werden in DE 4009858 in Spalte 6, Zeile 53 bis Spalte 7, Zeile 61 und Spalte 10, Zeile 24 bis Spalte 13, Zeile 3 beschrieben.

Darüber hinaus kann der pigmentierte wässrige Basislack noch mindestens einen Zusatzstoff enthalten. Beispiele für derartige Zusatzstoffe sind rückstandsfrei oder im Wesentlichen rückstandsfrei thermisch zersetzbare Salze, von Polyurethanharzen verschiedene physikalisch, thermisch und/oder mit aktinischer Strahlung härtbare Harze als Bindemittel, weitere Vernetzungsmittel, organische Lösemittel, Reaktivverdünner, transparente Pigmente, Füllstoffe, molekulardispers lösliche Farbstoffe, Nanopartikel, Lichtschutzmittel, Antioxidantien, Entlüftungsmittel, Emulgatoren, Slipadditive, Polymerisationsinhibitoren, Initiatoren für radikalische Polymerisationen, Haftvermittler, Verlaufsmittel, filmbildende Hilfsmittel, Sag-Control-Agents (SCAs), Flammschutzmittel, Korrosionsinhibitoren, Wachse, Sikkative, Biozide und Mattierungsmittel.

Geeignete Zusatzstoffe der vorstehend genannten Art sind beispielsweise aus
- der deutschen Patentanmeldung DE 199 48 004 A1, Seite 14, Zeile 4, bis Seite 17, Zeile 5,
- dem deutschen Patent DE 100 43 405 C1, Spalte 5, Absätze [0031] bis [0033],
bekannt. Sie werden in den üblichen und bekannten Mengen eingesetzt.

Der Festkörpergehalt der erfindungsgemäß eingesetzten Basislacke kann je nach den Erfordernissen des Einzelfalls variieren. In erster Linie richtet sich der Festkörpergehalt nach der für die Applikation, insbesondere Spritzapplikation, erforderlichen Viskosität, so dass er vom Fachmann aufgrund seines allgemeinen Fachwissens gegebenenfalls unter Zuhilfenahme weniger orientierender Versuche eingestellt werden kann.

Vorzugsweise liegt der Festkörpergehalt der Basislacke bei 5 bis 70 Gew.-%, besonders bevorzugt bei 10 bis 65 Gew.-% und insbesondere bevorzugt bei 15 bis 60 Gew.-%.

Unter Festkörpergehalt ist derjenige Gewichtsanteil zu versehen, der unter festgelegten Bedingungen beim Eindampfen als Rückstand verbleibt. In der vorliegenden Anmeldung wurde der Festkörper nach DIN EN ISO 3251 bestimmt. Die Messdauer betrug 60 min bei 125°C.

Die Herstellung der erfindungsgemäß eingesetzten Basislacke kann unter Einsatz der für die Herstellung von Basislacken üblichen und bekannten Mischverfahren und Mischaggregate erfolgen.

Die erfindungsgemäßen Basislacke können sowohl als Einkomponenten(1K), Zweikomponenten(2K)- oder Mehrkomponenten(3K, 4K)-Systeme zur Anwendung kommen. Bevorzugt sind (1 K)-Systeme.

In Einkomponenten(1K)-Systemen liegen Bindemittel und Vernetzungsmittel nebeneinander, d.h. in einer Komponente, vor. Voraussetzung hierfür ist, dass die beiden Bestandteile erst bei höheren Temperaturen und/oder bei Bestrahlen mit aktinischer Strahlung miteinander vernetzen.

In Zweikomponenten(2K)-Systemen liegen beispielsweise Bindemittel und Vernetzungsmittel getrennt voneinander in mindestens zwei Komponenten vor, die erst kurz vor der Applikation zusammengegeben werden. Diese Form wird dann gewählt, wenn Bindemittel und Vernetzungsmittel bereits bei Raumtemperatur miteinander reagieren. Lacke dieser Art werden vor allem zur Beschichtung thermisch empfindlicher Substrate, insbesondere in der Autoreparaturlackierung, angewandt.

Die Applikation des erfindungsgemäß eingesetzten pigmentierten wässrigen Basislacks auf ein Substrat kann in den im Rahmen der Automobilindustrie üblichen Schichtdicken im Bereich von beispielsweise 5 bis 100 Mikrometer, bevorzugt 5 bis 60 Mikrometer erfolgen. Dabei werden beispielsweise die bekannten Methoden wie Spritzen, Rakeln, Streichen, Giessen, Tauchen, Tränken, Träufeln oder Walzen angewendet. Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heissspritzapplikation wie zum Beispiel Hot-Air-Heissspritzen.

Nach der Applikation des pigmentierten wässrigen Basislacks kann dieser nach bekannten Methoden getrocknet werden. Beispielsweise können (1K)-Basislacke bei Raumtemperatur für 1 bis 60 Minuten abgelüftet werden und darauf folgend bevorzugt bei gegebenenfalls leicht erhöhten Temperaturen von 30 bis 80°C getrocknet werden. Unter Ablüften und Trocknung ist im Rahmen der vorliegenden Erfindung ein Abdunsten von organischen Lösemitteln und/oder Wasser zu verstehen, wodurch der Lack trockener, aber noch nicht gehärtet wird. beziehungsweise noch kein vollständig vernetzter Lackfilm gebildet wird.

Dann wird ein handelsüblicher Klarlack nach ebenfalls gängigen Methoden appliziert, wobei die Schichtdicken wiederum in den gängigen Bereichen, beispielsweise 5 bis 100 Mikrometer, liegen. Solche Klarlacke sind dem Fachmann bekannt.

Nach der Applikation des Klarlacks kann dieser bei Raumtemperatur für beispielsweise 1 bis 60 Minuten abgelüftet und gegebenenfalls getrocknet werden. Dann wird der Klarlack zusammen mit dem applizierten pigmentierten Basislack gehärtet. Dabei finden beispielsweise Vernetzungsreaktionen statt, wodurch eine erfindungsgemäße farb- und/oder effektgebende mehrschichtige Lackierung auf einem Substrat hergestellt wird. Die Härtung erfolgt bevorzugt thermisch oder thermisch und mit aktinischer Strahlung bei Temperaturen von 80 bis 200°C.

Mit Hilfe des erfindungsgemäßen Verfahrens können metallische und nichtmetallische Substrate, insbesondere Kunststoffsubstrate, vorzugsweise Automobilkarosserien oder Teile davon lackiert werden.

Gegenstand der Erfindung sind auch die entsprechenden Lacke und die Verwendung der in den erfindungsgemäßen Basislacken eingesetzten mindestens einen erfindungsgemäßen Etherverbindung zur Erhöhung der Nadelstichgrenze und/oder zur Verminderung der Nadelstichanzahl in wässrigen pigmentierten Lacken. Alle vorstehend bezüglich des erfindungsgemäßen Verfahrens genannten Merkmale beziehen sich ebenfalls auf die entsprechenden Lacke und die Verwendung der in den erfindungsgemäßen Basislacken eingesetzten mindestens einen erfindungsgemäßen Etherverbindung zur Erhöhung der Nadelstichgrenze und/oder zur Verminderung der Nadelstichanzahl in wässrigen pigmentierten Lacken. Dies gilt insbesondere auch für alle genannten bevorzugten, besonders bevorzugten und ganz besonders bevorzugten Merkmale.

Im Folgenden wird die Erfindung anhand von Beispielen erläutert.

### Beispiele

### 1. Herstellung eines silbernen Wasserbasislacks 1

Die in der Tabelle A unter "wässrige Phase" aufgeführten Komponenten werden in der angegebenen Reihenfolge zu einer wässrigen Mischung zusammengerührt. Im nächsten Schritt wird aus den unter "organische Phase" aufgeführten Komponenten eine organische Mischung hergestellt. Die organische Mischung wird zur wässrigen Mischung gegeben. Sodann wird 10 min lang gerührt und mit Hilfe von deionisiertem Wasser und Dimethanolamin auf einen pH Wert von 8 und eine Spritzviskosität von 58 mPas bei einer Scherbelastung von 1000/sec, gemessen mit einem RotationsViskosimeter (Gerät Rheomat RM 180 der Firma Mettler-Toledo) bei 23°C, eingestellt.

**Tabelle A**

| Komponente | Gewichtsteile |
|---|---|
| **Wässrige Phase** | |
| 3%ige Na-Mg-Schichtsilikatlösung | 26 |
| Deionisertes Wasser | 3 |
| Butylglykol | 1,75 |
| Polyurethanacrylat; hergestellt gemäß S. 7, Z. 55-S.8, Z. 23 der DE-A-4437535 | 4,5 |
| 50 Gew.-% ige Lösung DSX 1550 (Cognis) Rheologiemittel | 0,6 |
| Polyester; hergestellt gemäß Beispiel D, Spalte 16, Z. 37-59 der DE-A-4009858 | 3,2 |
| Tensid S (BASF) | 0,3 |
| Butylglykol | 0,55 |
| Cymel 203; Melaminformaldehydharz, erhältlich von Cytec | 4,1 |
| 10%iges Dimethylethanolamin in Wasser | 0,3 |
| Deionisiertes Wasser | 6 |
| Polyurethanacrylat; hergestellt gemäß S. 19, Z. 44-S. 20, Z. 21 der DE-A-19948004 | 20,4 |
| Tensid Surfynol® 104 der Firma Air Products (52%ig) | 1,6 |
| Butylglykol | 0,5 |
| 3 Gew.-%ige wässrige Viscalex HV 30 Lösung; Rheologiemittel, erhältlich von BASF, in Wasser | 3,9 |

| **Organische Phase** | |
|---|---|
| Mischung zweier handelsüblicher Aluminiumpigmente, erhältlich von Firma Altana-Eckart | 6,2 |
| Butylglykol | 7,5 |
| Polyester; hergestellt gemäß Beispiel D, Spalte 16, Z. 37-59 der DE-A-4009858 | 5 |

### Wasserbasislack E1:

Zur Herstellung des erfindungsgemäßen Wasserbasislacks E1 wurde der Wasserbasislack 1 mit 1,5 Gewichtsteilen des Handelsprodukts Vammar ® D10 versetzt.

**Tabelle 1: Zusammensetzungen der Wasserbasislacke 1 und E1**

| **WBL** | **[Gew.-%]** | **Erfindungsgemäße Etherverbindung** |
|---|---|---|
| 1 | -- | -- |
| E1 | 1,5 | Vammar ® D10 |

Die Gewichtsprozentangaben in Tabelle 1 beziehen sich auf den Anteil des Gemischs der erfindungsgemäßen Etherverbindung im jeweiligen Wasserbasislack.

### Vergleichsversuch zwischen Wasserbasislack 1 und dem Wasserbasislack E1

Zur Bestimmung der Nadelstichgrenze und der Nadelstichanzahl wurden die Mehrschichtlackierungen nach der folgenden allgemeinen Vorschrift hergestellt:
Ein mit einer Füllerlackierung beschichtetes Stahlblech der Abmessungen 30 x 50 cm wurde an einer Längskante mit einem Klebstreifen versehen, um nach der Beschichtung die Schichtdickendifferenzen ermitteln zu können. Der Wasserbasislack wurde keilförmig elektrostatisch appliziert. Die resultierende Wasserbasislackschicht wurde während einer Minute bei Raumtemperatur abgelüftet und anschließend während 10 Minuten im Umluftofen bei 70°C getrocknet. Auf die getrocknete Wasserbasislackschicht wurde ein üblicher Zweikomponentenklarlack appliziert. Die resultierende Klarlackschicht wurde während 20 Minuten bei Raumtemperatur abgelüftet. Anschließend wurden die Wasserbasislackschicht und die Klarlackschicht in einem Umluftofen während 20 Minuten bei 140°C gehärtet. Nach der visuellen Auswertung der Nadelstiche in der resultierenden keilförmigen Mehrschichtlackierung wurde die Schichtdicke der Nadelstichgrenze bestimmt. Die Ergebnisse finden sich in der Tabelle 2.

**Tabelle 2: Nadelstichgrenze und Nadelstichanzahl von Wasserbasislack 1 und dem Wasserbasislacken E1**

| **WBL** | **Nadelstichgrenze (Mikrometer)** | **Nadelstichanzahl** |
|---|---|---|
| 1 | 20 | 17 |
| E1 | 30 | 1 |

Die Ergebnisse untermauern, dass der Einsatz des Gemischs der erfindungsgemäßen Etherverbindung die Nadelstichgrenze im Vergleich zu Wasserbasislack 1 erhöht und gleichzeitig die Nadelstichanzahl vermindert.

## Patentansprüche

1. Verfahren zur Herstellung einer farb- und/oder effektgebenden mehrschichtigen Lackierung, bei dem
(1) ein pigmentierter wässriger Basislack auf ein Substrat aufgebracht wird,
(2) aus dem in Stufe (1) aufgebrachten Lack ein Polymerfilm gebildet wird,
(3) auf die so erhaltene Basislackschicht ein Klarlack aufgebracht wird und anschließend
(4) die Basislackschicht zusammen mit der Klarlackschicht gehärtet wird,
**dadurch gekennzeichnet, dass** in Stufe (1) ein pigmentierter wässriger Basislack eingesetzt wird, welcher mindestens eine Etherverbindung der Strukturformel (I) 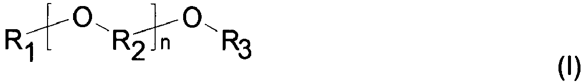 enthält, wobei es sich bei R₁ um einen Cₓ-Alkylrest, bei R₂ um einen C_{y}-Alkylenrest und bei R₃ um einen C_{z}-Alkylrest handelt, n = 0 bis 5 beträgt, die weitere Bedingung x + n · y + z = 18 bis 24 erfüllt ist und die Summe über die gewichtsprozentualen Anteile, bezogen auf das Gesamtgewicht des in Stufe (1) aufgetragenen wässrigen Basislacks, aller Etherverbindungen gemäß Strukturformel (I) 0,1 bis 5 Gew.-%, beträgt.

2. Verfahren nach Anspruch 1, **dadurch gekennzeichnet, dass** die Summe über die gewichtsprozentualen Anteile, bezogen auf das Gesamtgewicht des in Stufe (1) aufgetragenen wässrigen Basislacks, aller Etherverbindungen gemäß Strukturformel (I) 0,2 bis 4 Gew.-%, beträgt.

3. Verfahren nach mindestens einem der Ansprüche 1 und 2, **dadurch gekennzeichnet, dass** ein Gemisch aus den besagten Etherverbindungen eingesetzt wird.

4. Verfahren nach mindestens einem der Ansprüche 1 bis 3, **dadurch gekennzeichnet, dass** x + n · y + z = 18 bis 22 ist.

5. Verfahren nach mindestens einem der Ansprüche 1 bis 4, **dadurch gekennzeichnet, dass** n = 0 bis 2 ist.

6. Verfahren nach mindestens einem der Ansprüche 1 bis 5, **dadurch gekennzeichnet, dass** n = 0 und zusätzlich die Bedingung x + n · y + z = 18 bis 22 erfüllt ist.

7. Pigmentierter wässriger Basislack, **dadurch gekennzeichnet, dass** der Lack mindestens eine Etherverbindung der Strukturformel (I) 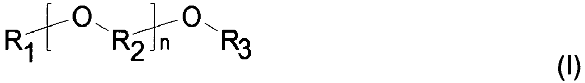 enthält, wobei es sich bei R₁ um einen Cₓ-Alkylrest, bei R₂ um einen C_{y}-Alkylenrest und bei R₃ um einen C_{z}-Alkylrest handelt, n = 0 bis 5 beträgt und die weitere Bedingung x + n · y + z = 18 bis 24 erfüllt ist und die Summe über die gewichtsprozentualen Anteile, bezogen auf das Gesamtgewicht des wässrigen Basislacks, aller Etherverbindungen gemäß Strukturformel (I) 0,1 bis 5 Gew.-%, beträgt.

8. Pigmentierter wässriger Basislack nach Anspruch 7, **dadurch gekennzeichnet, dass** die Summe über die gewichtsprozentualen Anteile, bezogen auf das Gesamtgewicht des pigmentierten wässrigen Basislacks, aller Etherverbindungen gemäß Strukturformel (I) 0,2 bis 4 Gew.-%, beträgt.

9. Pigmentierter wässriger Basislack nach mindestens einem der Ansprüche 7 und 8, **dadurch gekennzeichnet, dass** ein Gemisch aus den besagten Etherverbindungen eingesetzt wird.

10. Pigmentierter wässriger Basislack nach mindestens einem der Ansprüche 7 bis 9, **dadurch gekennzeichnet, dass** x + n · y + z = 18 bis 22 ist.

11. Pigmentierter wässriger Basislack nach mindestens einem der Ansprüche 7 bis 10, **dadurch gekennzeichnet, dass** n = 0 und zusätzlich die Bedingung x + n · y + z = 18 bis 22 erfüllt ist.

12. Verwendung von mindestens einer Etherverbindung der Strukturformel (I) 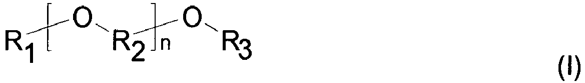 in pigmentierten wässrigen Basislacken zur Erhöhung der Nadelstichgrenze und/oder zur Verminderung der Nadelstichanzahl, wobei es sich bei R₁ um einen Cₓ-Alkylrest, bei R₂ um einen C_{y}-Alkylenrest und bei R₃ um einen C_{z}-Alkylrest handelt, n = 0 bis 5 beträgt und die weitere Bedingung x + n · y + z = 18 bis 24 erfüllt ist und die Summe über die gewichtsprozentualen Anteile, bezogen auf das Gesamtgewicht des wässrigen Basislacks, aller Etherverbindungen gemäß Strukturformel (I) 0,1 bis 5 Gew.-%, beträgt.

13. Verwendung nach Anspruch 12, **dadurch gekennzeichnet, dass** die Summe über die gewichtsprozentualen Anteile, bezogen auf das Gesamtgewicht des pigmentierten wässrigen Basislacks, aller Etherverbindungen gemäß Strukturformel (I) 0,2 bis 4 Gew.-%, beträgt.

14. Verwendung nach mindestens einem der Ansprüche 13 und 14, **dadurch gekennzeichnet, dass** ein Gemisch aus den besagten Etherverbindungen eingesetzt wird.

15. Verwendung nach mindestens einem der Ansprüche 12 bis 14, **dadurch gekennzeichnet, dass** n = 0 und zusätzlich die Bedingung x + n · y + z = 18 bis 22 erfüllt ist.

## Claims

1. Method for producing a multicoat color and/or effect paint system, by
(1) applying a pigmented aqueous basecoat material to a substrate,
(2) forming a Polymer film from the coating material applied in stage (1),
(3) applying a clearcoat material to the resulting basecoat film, and subsequently
(4) curing the basecoat film together with the clearcoat film,
**characterized in that** in stage (1) a pigmented aqueous basecoat material is used which comprises at least one ether compound of the structural formula (I) 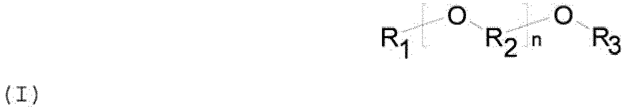 where R₁ is a Cₓ alkyl radical, R₂ is a C_{y} alkylene radical and R₃ is a C_{z} alkyl radical, n is 0 to 5, the further condition x + n • y + z = 18 to 24 is met, and the sum total of the weight percentage fractions, based on the total weight of the aqueous basecoat material applied in stage (1), of all of the ether compounds of structural formula (I) is 0.1% to 5% by weight.

2. Method according to Claim 1, **characterized in that** the sum total of the weight percentage fractions, based on the total weight of the aqueous basecoat material applied in stage (1), of all of the ether compounds of structural formula (I) is 0.2% to 4% by weight.

3. Method according to at least one of Claims 1 and 2, **characterized in that** a mixture of the said ether compounds is used.

4. Method according to at least one of Claims 1 to 3, **characterized in that** x + n · y + z = 18 to 22.

5. Method according to at least one of Claims 1 to 4, **characterized in that** n is 0 to 2.

6. Method according to at least one of Claims 1 to 5, **characterized in that** n is 0 and additionally the condition x + n • y + z = 18 to 22 is met.

7. Pigmented aqueous basecoat material **characterized in that** it comprises at least one ether compound of the structural formula (I) 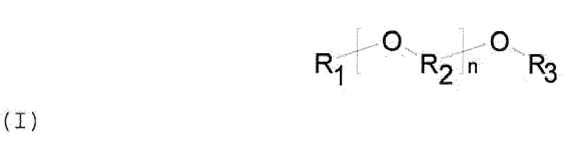 where R₁ is a Cₓ alkyl radical, R₂ is a C_{y} alkylene radical and R₃ is a C_{z} alkyl radical, n is 0 to 5 and the further condition x + n · y + z = 18 to 24 is met, and the sum total of the weight percentage fractions, based on the total weight of the aqueous basecoat material, of all of the ether compounds of structural formula (I) is 0.1% to 5% by weight .

8. Pigmented aqueous basecoat material according to Claim 7, **characterized in that** the sum total of the weight percentage fractions, based on the total weight of the pigmented aqueous basecoat material, of all of the ether compounds of structural formula (I) is 0.2% to 4% by weight.

9. Pigmented aqueous basecoat material according to at least one of Claims 7 and 8, **characterized in that** a mixture of the said ether compounds is used.

10. Pigmented aqueous basecoat material according to at least one of Claims 7 to 9, **characterized in that** x + n · y + z = 18 to 22.

11. Pigmented aqueous basecoat material according to at least one of Claims 7 to 10, **characterized in that** n is 0 and additionally the condition x + n · y + z = 18 to 22 is met.

12. Use of at least one ether compound of the structural formula (I) 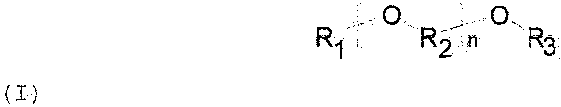 in pigmented aqueous basecoat materials for raising the pinholing limit and/or for reducing the number of pinholes, where R₁ is a Cₓ alkyl radical, R₂ is a C_{y} alkylene radical and R₃ is a C_{z} alkyl radical, n is 0 to 5, the further condition x + n · y + z = 18 to 24 is met, and the sum total of the weight percentage fractions, based on the total weight of the aqueous basecoat material, of all of the ether compounds of structural formula (I) is 0.1% to 5% by weight.

13. Use according to Claim 12, **characterized in that** the sum total of the weight percentage fractions, based on the total weight of the pigmented aqueous basecoat material, of all of the ether compounds of structural formula (I) is 0.2% to 4% by weight.

14. Use according to at least one of Claims 13 and 14, **characterized in that** a mixture of the said ether compounds is used.

15. Use according to at least one of Claims 12 to 14, **characterized in that** n is 0 and additionally the condition x + n • y + z = 18 to 22 is met.

## Revendications

1. Procédé pour la préparation d'un laquage multicouche conférant une couleur et/ou un effet, dans lequel
(1) une laque de base aqueuse pigmentée est appliquée sur un substrat,
(2) un film polymère est formé sur la laque appliquée dans l'étape (1),
(3) une laque claire est appliquée sur la couche de laque de base ainsi obtenue et ensuite
(4) la couche de laque de base est durcie ensemble avec la couche de laque claire, **caractérisé en ce qu'**on utilise, dans l'étape (1), une laque de base aqueuse pigmentée qui contient au moins un composé d'éther de formule développée (I) 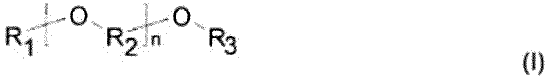 dans laquelle R₁ représente un radical Cₓ-alkyle, R₂ représente un radical C_{y}-alkylène et R₃ représente un radical C_{z}-alkyle, n = 0 à 5, la condition supplémentaire x + n.y + z = 18 à 24 est satisfaite et la somme des proportions pondérales, par rapport au poids total de la laque de base aqueuse appliquée dans l'étape (1), de tous les composés d'éther selon la formule développée (I) vaut 0,1 à 5% en poids.

2. Procédé selon la revendication 1, **caractérisé en ce que** la somme des proportions pondérales, par rapport au poids total de la laque de base aqueuse appliquée dans l'étape (1), de tous les composés d'éther selon la formule développée (I) vaut 0,2 à 4% en poids.

3. Procédé selon au moins l'une quelconque des revendications 1 et 2, **caractérisé en ce qu'**on utilisé un mélange desdits composés d'éther.

4. Procédé selon au moins l'une quelconque des revendications 1 à 3, **caractérisé en ce que** x + n.y + z = 18 à 22.

5. Procédé selon au moins l'une quelconque des revendications 1 à 4, **caractérisé en ce que** n = 0 à 2.

6. Procédé selon au moins l'une quelconque des revendications 1 à 5, **caractérisé en ce que** n = 0 et la condition x + n.y + z = 18 à 22 est en outre satisfaite.

7. Laque de base aqueuse, pigmentée, **caractérisée en ce que** la laque contient au moins un composé d'éther de formule développée (I) 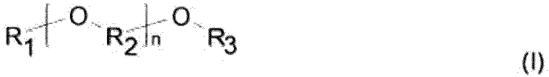 dans laquelle R₁ représente un radical Cₓ-alkyle, R₂ représente une radical C_{y}-alkylène et R₃ représente un radical C_{z}-alkyle, n = 0 à 5, la condition supplémentaire x + n.y + z = 18 à 24 est satisfaite et la somme des proportions pondérales, par rapport au poids total de la laque de base aqueuse, de tous les composés d'éther selon la formule développée (I) vaut 0,1 à 5% en poids.

8. Laque de base aqueuse, pigmentée, selon la revendication 7, **caractérisée en ce que** la somme des proportions pondérales, par rapport au poids total de la laque de base aqueuse pigmentée, de tous les composés d'éther selon la formule développée (I) vaut 0,2 à 4% en poids.

9. Laque de base aqueuse, pigmentée, selon au moins l'une quelconque des revendications 7 et 8, **caractérisée en ce qu'**on utilise un mélange desdits composés d'éther.

10. Laque de base aqueuse, pigmentée, selon au moins l'une quelconque des revendications 7 à 9, **caractérisée en ce que** x + n.y + z = 18 à 22.

11. Laque de base aqueuse, pigmentée, selon au moins l'une quelconque des revendications 7 à 10, **caractérisée en ce que** n = 0 et la condition x + n.y + z = 18 à 22 est en outre satisfaite.

12. Utilisation d'au moins un composé d'éther de formule développée (I) 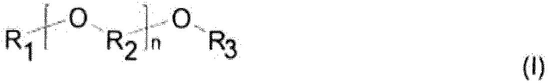 dans des laques de base aqueuses, pigmentées, pour augmenter la limite de formation de trous d'épingle et/ou pour diminuer le nombre de trous d'épingle, dans laquelle R₁ représente un radical Cₓ-alkyle, R₂ représente un radical C_{y}-alkylène et R₃ représente un radical C_{z}-alkyle, n = 0 à 5, la condition supplémentaire x + n.y + z = 18 à 24 est satisfaite et la somme des proportions pondérales, par rapport au poids total de la laque de base aqueuse, de tous les composés d'éther selon la formule développée (I) vaut 0,1 à 5% en poids.

13. Utilisation selon la revendication 12, **caractérisée en ce que** la somme des proportions pondérales, par rapport au poids total de la laque de base aqueuse pigmentée, de tous les composés d'éther selon la formule développée (I) vaut 0,2 à 4% en poids.

14. Utilisation selon au moins l'une quelconque des revendications 13 et 14, **caractérisée en ce qu'**on utilise un mélange desdits composés d'éther.

15. Utilisation selon au moins l'une quelconque des revendications 12 à 14, **caractérisée en ce que** n = 0 et la condition x + n.y + z = 18 à 22 est en outre satisfaite.
